# EUROPEAN PATENT APPLICATION

(11) **EP 4 265 684 A1**
(43) Date of publication of application: **25.10.2023**
(21) Application number: 22169279.1
(22) Date of filing: 21.04.2022
(51) Int. Cl.: C08L 67/02

(54) **AN IMPROVED FLAME RETARDANT POLYESTER**

(71) Applicant: Nexam Chemical AB, 234 35 Lomma (SE)
(72) Inventor: Solano, Carlos, 223 53 Lund (SE); Pisciotti, Francesco, 247 63 Veberöd (SE); Röme, Daniel, 222 35 Lund (SE)
(74) Representative: Ström & Gulliksson AB

(57) **Abstract**

A thermoplastic polyester composition, comprising, apart from a thermoplastic polyester as the major component, 1 to 30 wt.% of a polyphosphonate and 0.01 to 1.5 wt.% of a polyanhydride.

## Description

### FIELD OF THE INVENTION

The present invention relates to flame retardant thermoplastic polyester composition with improved melt rheology. Further, the invention relates to a method for providing a thermoplastic polyester composition with flame retardant properties without impairing the melt rheology.

### BACKGROUND

Thermoplastic polyesters are used in various applications, such as blow molding of e.g. bottles and in foaming to provide light-weight construction core materials for sandwich structures, e.g. for wind turbine rotors. Further, they are used fibers, films and filaments. Most applications require a certain melt rheology, e.g. melt viscosity, and it typically necessary to avoid impairing the melt strength in compounding the polyester. Further, it often desired to improve the melt strength in compounding thermoplastic polyesters for applications, such as foaming to provide light-weight construction core materials.

In addition, upgrading of recycled (i.e. upcycling) thermoplastic polyesters, most typically polyethylene terephthalate (PET), is of interest in the art, as the need for the use of virgin polyester thereby may be dispensed with.

Moreover, thermoplastic polyesters suffer from having a narrow processing window, thereby typically requiring specialized processing equipment. This is related to the melt rheology of thermoplastic polyesters. Thermoplastic polyesters typically have low melt viscosity, low melt strength and low melt elasticity. This is a consequence of the attainable molecular weight and linear molecular architecture, being limited by the melt viscosity of polyesters commercially produced in melt processes. For extrusion processes, e.g. extrusion of PET foam, the melt strength is a critical parameter.

Indeed, means for improving thermoplastic polyesters are desired in the art. As reported in EP 2 163 577 B1, upgrading or improvement of PET resins by using chain-extenders, such as compounds comprising tetracarboxylic dianhydrides (e.g. pyromellitic dianhydride - PMDA) dates back at least to the 1990s. In such upgrading processes, low molecular polyester is processed together with multifunctional anhydrides as chain-extender/- brancher by extrusion. It has been concluded that reaction of PET with dianhydrides, particularly PMDA, may be effective in raising the intrinsic viscosity.

Further, additional additives have been discussed in the art. As an example, EP 2 163 577 B1 teaches combining PMDA with sterically hindered phenolic antioxidants and a bisoxazoline, e.g. 1,3-phenyl bisoxazoline or 1,4-phenyl bisoxazoline, to provide a concentrate, i.e. a masterbatch, useful as chain-extending/branching agent. Similarly, the use of PMDA and a bisoxazoline in combination with a poly functional compound comprising at least two non-sterically hindered phenolic hydroxyl groups to alter the melt characteristics of a polyester has been disclosed in WO 2012/120148. Further, the combined use of 5-(3-phenylprop-2-ynoyl)isobenzofuran-1,3-dione (**P**henyl**E**thynyl**T**rimellitic**A**nhydride; PETA) and a bisoxazoline to improve the melt strength of a thermoplastic polymer has been disclosed in EP 3 246 349.

However, in some applications it is further necessary to add flame retardant agents to the thermoplastic polyester compound, as foamed cellular materials of thermoplastic polymer compounds show no or poor flame-resistance, when exposed to fire. As recognized in the art (see for example EP 2 258 754), it is difficult add flame retardant agents without impairing the thermoplastic polyester compound, given the harsh processing conditions of the polyester foams (generally exceeding 290°C and 100 bar). Not only are most flame retarding agent prone to be degraded at such conditions, they also tend to interact with additives used to improve the melt rheology.

As an example, use of Br/Sb₂O₃ combination containing a brominated diphenyl derivative, has been reported (cf. EP 2 258 754) to lead to a dramatic pressure decrease in the extruder so that no stable foaming process is possible. Further, it has been reported (cf. EP 0 908 488) that use of 3.0 wt% ethylenebistetra-bromophthalimide and 0.3 wt% sodium antimonite in combination with PMDA provides a foam product classifiable with B 1 according to DIN 4102. However, the SBI classification of such a foamed product according to prEN 13823 is actually worse than the classification for a PET foam containing no FR, when it comes to fire growth rate (FIGRA), smoke production and max. smoke growth rate (SMOGRA). In addition, the disadvantages with halogen-containing flame retardants are recognized in the art.

Further, a review of phosphor-containing flame retardants currently available for polyester applications (e.g. micronized aluminium tris(diethylphosphinate), oxaphospholane glycol ester, and ammonium polyphosphate) were according to EP 2 258 754 found to impair the foaming process such that no polyester foam could be manufactured. However, it is stated that meltable zinc phosphinates up to 10 wt% could be used without impairing the foamability of polyester resin.

Still, there is a need in the art for flame retardant thermoplastic polyester compounds with melt rheology sufficiently tailored for foaming processes.

### SUMMARY

Consequently, the present invention seeks to mitigate, alleviate, eliminate or circumvent one or more of the above identified deficiencies and disadvantages in the art singly, or in any combination, by providing, according to first aspect, a thermoplastic polyester composition, comprising - apart from the thermoplastic polyester being the major component of the composition - 1 to 30 wt.%, such as 3 to 20 wt.% or 5 to 15 wt.%, of a polyphosphonate and 0.01 to 1.5 wt.%, such as 0.05 to 0.75 wt.% or 0.1 to 0.5 wt.%, of a polyanhydride. Further, the ratio (wt./wt.) of polyphosphonate to polyanhydride may be in the range 8:1 to 75:1, such as 10:1 to 50:1 or 12:1 to 25:1.

It has unexpectedly been found that polyphosphonates, apart from acting as a flame retardant, do not impair the melt strength of the plastic. Surprisingly, they may even act synergistically with a polyanhydride. This finding is contrary to reports in the art (cf. EP2258754) teaching that phosphor-containing flame retardants typically interfere with the melt strength enhancing reaction of other additives, such as polyanhydrides.

Polyphosphonates are polymers comprising residues of phosphonate monomers. Further, polyphosphonates typically comprise diols as co-monomers. According to an embodiment, the polyphosphonate comprises residues of diphenyl-alkyl-phosphonate, such as diphenyl-methyl-phosphonate. Further, the polyphosphonate may comprise residues of an aromatic diol, e.g. a bisphenol, such as bisphenol A. Thus, the polyphosphonate may comprise residues of diphenyl-methyl-phosphonate as well as bisphenol A.

The polyphosphonate may be:
a polyphosphonate of Formula I;
a random or block co-poly(phosphonate carbonate) of Formula II; or
a random or block co-poly(phosphonate ester) of Formula III: 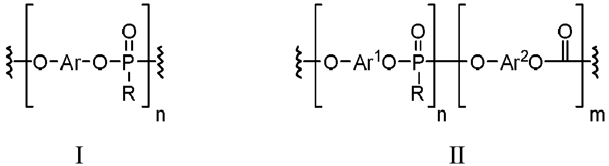 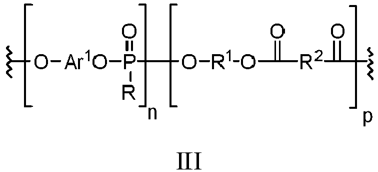 wherein:
   Ar is an aromatic group and -O-Ar-O- is derived from resorcinol, hydroquinone, methyl hydroquinone, bisphenol A, bisphenol F, 4,4'-biphenol, phenolphthalein and phenolphthalein derivatives, 4,4'-thiodiphenol, 4,4'-sulfonyldiphenol, 1,1-bis-(4-hydroxyphenyl)-3,3,5-trimethylcyclohexane, or combinations thereof; preferably Ar is derived from bisphenol A;
   Ar¹ and Ar² are aromatic groups and each -O-Ar¹-O- and -O-Ar²-O- is, individually, derived from resorcinol, hydroquinone, bisphenol A, bisphenol F, 4,4'-biphenol, phenolphthalein, 4,4'-thiodiphenol, 4,4'-sulfonyldiphenol, 1,1-bis-(4-hydroxyphenyl)-3,3,5-trimethylcyclohexane, and combinations thereof; preferably Ar¹ and Ar², respectively, are derived from bisphenol A;
   R is a C1-20 alkyl, C2-20 alkene, C2-20, alkyne, C5-20 cycloalkyl, or C6-20 aryl; preferably R is methyl;
   each R¹ and R² are, individually, aliphatic hydrocarbons, such as ethylene or butylene (i.e. residues of ethane-1,2-diol or butane-1,4-diol), or aromatic hydrocarbons, such as phenylene (i.e. residues of terephthalic acid, e.g. para-phenylene); preferably R¹ is an aliphatic hydrocarbon, whereas R² is an aromatic hydrocarbon;
   m is an integer from 1 to 200, such as 5 to 100;
   n is an integer from 1 to 200, such as 5 to 100; and
   p is an integer from 1 to 200, such as 5 to 100,
   wherein m, n and p are selected such that the degree of polymerization is at least 3, preferably at least 10.

As appreciated by the skilled person, each block in a polyphosphonate of Formula II and III, respectively, may occur more once. Thus, the integers m, n and p may occur more than once. The integers m, n and p may vary between each block. The integers m¹, m², m³ etc. may independently be an integer of from 1 to 200. Similarly, the integers n¹, n², n³ etc. and p¹, p², p³ etc., respectively, may independently be an integer of from 1 to 200.

Thus, the polyphosphonate may comprise residues of diphenyl-methyl-phosphonate as well as bisphenol A. Further, a random or block co-poly(phosphonate carbonate) of Formula II may comprise residues of diphenyl-methyl-phosphonate, bisphenol A, and phosgene. Furthermore, a random or block co-poly(phosphonate ester) of Formula III may comprise residues of diphenyl-methyl-phosphonate, bisphenol A, ethane-1,2-diol or butane-1,4-diol, and terephthalic acid.

The polyanhydride in the thermoplastic polyester composition comprises at least two carboxylic anhydride moieties, such as maleic anhydride or succinic anhydride. Typically, the anhydride moieties are fused on an aromatic ring, which can be the same ring or two connected rings. The most typical example of a polyanhydride to be present in the thermoplastic polyester composition is pyromellitic dianhydride (PMDA). However, also other polyanhydrides, such as 3,3', 4,4'benzophenonetetracarboxylic acid dianhydride (BTDA) may be used.

According to an embodiment, the polyanhydride is selected from the group consisting of pyromellitic dianhydride, benzophenone dianhydride, 2,2-bis (3,4-dicarboxyphenyl) propane dianhydride, 3,3', 4,4'-biphenyltetracarboxylic acid dianhydride, bis (3,4-dicarboxyphenyl) ether dianhydride, bis (3,4-dicarboxyphenyl) thioether dianhydride, bisphenol A bisether dianhydride, 2,2-bis (3,4-dicarboxylphenyl) hexafluoropropane dianhydride, 2,3,6,7-naphtalene-tetracarboxylic acid dianhydride, bis (3,4-dicarboxyphenyl) sulfone dianhydride, 1,2,5,6-naphthalate ne-tetracarvoxylic acid dianhydride, 2,2',3,3'-biphenyltetracarvoxylic acid dianhydride, hydroquinone bisether dianhydride, bis (3,4-dicarboxyphenyl) sulfoxide dianhydride, 3,4,9,10-perylene tetracarboxylic acid dianhydride and blends thereof.

According to an embodiment, the polyanhydride in the thermoplastic polyester composition is a tetracarboxylic dianhydride, such as pyromellitic dianhydride (PMDA) or 3,3',4,4'-Benzophenonetetracarboxylic dianhydride (BTDA). According to an embodiment, the polyanhydride is pyromellitic dianhydride (PMDA).

According to some embodiments, the thermoplastic polyester composition comprises further additive(s). Further additive(s) may be added to improve the stability and/or the melt rheology, such as the melt strength. Apart from polyanhydride and the polyphosphonate, the thermoplastic polyester composition may thus optionally comprise further additives. As an example, the thermoplastic polyester composition may comprise a polyoxazoline, typically a bisoxazoline, e.g. 1,3-phenylene-bis-oxazoline (1,3-PBO), or 1,4-phenylene-bis-oxazoline (1,4-PBO). Further, the thermoplastic polyester composition may comprise a sterically hindered phenolic antioxidant. There are various known sterically hindered phenolic antioxidants in the art. According to an embodiment, the thermoplastic polyester composition further comprises 4-((3,5-bis((4-hydroxy-3,5-ditert-butyl-phenyl)methyl)-2,4,6-trimethylphenyl)methyl)-2,6-ditert-butyl-phenol. Furthermore, the thermoplastic polyester composition may comprise a primary antioxidant and/or secondary antioxidant, such as 3,3',3',5,5',5'-hexa-tert-butyl-a,a',a'-(mesitylene-2,4,6-triyl)tri-p-cresol, bis-(2,4-di-tert.-butylphenol)pentaerythritol diphosphate, tetrakis-(2,4-ditert-butyphenyl)-4,4'-biphenylylen-diphosphonite, pentaerythritol tetrakis (3-(3,5-di-tert-butyl-4-hydroxyphenyl)propionate), hexamethylene bis(3-(3,5-di-tert.-butyl-4-hydroxyphenyl)propionate, a blend of (tris(2,4-di-tert-butylphenyl)phosphite) and pentaerythritol tetrakis (3-(3,5-di-tert-butyl-4-hydroxyphenyl)propionate), 2,2'-ethylidenebis(4,6-di-tert-butylphenyl)fluorophosphonite, (tris(2,4-di-tert-butylphenyl)phosphite), bis(2,4-dicumylphenyl)pentaerythritol diphosphate, octadecyl-3-(3,5-ditert.butyl-4-hydroxyphenyl)-propionate,N,N'-hexane-1,6-diylbis(3-(3,5-di-tert-butyl-4-hydroxyphenylpropionamide)), 1,3,5-tris(3,5-di-tert-butyl-4-hydroxybenzyl)-1,3,5-triazine-2,4,6(1H,3H,5H)-trione, and/or calcium bis(monoethyl(3,5-di-tert-butyl-4-hydroxylbenzyl)phosphonate).

Further, the thermoplastic polyester composition may comprise 5-(3-phenylprop-2-ynoyl)isobenzofuran-1,3-dione (**P**henyl**E**thynyl**T**rimellitic**A**nhydride; PETA). 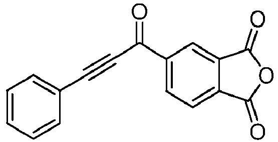 *PETA* - *PhenylEthynylTrimelliticAnhydride (5-(3-phenylprop-2-ynoyl)isobenzofuran-1, 3 -dione)*

According to an embodiment, the thermoplastic polyester composition comprises a bisoxazoline and optionally PETA.

The bisoxazoline to optionally be comprised in the thermoplastic polyester composition may be a compound according to formula IV, 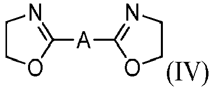 wherein "A" is a bond, meta-phenylene, or para-phenylene. "A" may also be pyridine-2,6-diyl, but that is less preferred. As an example, the bisoxazoline may be selected from the group consisting 1,3-bis(4,5-dihydrooxazol-2-yl)benzene (1,3-PBO), 1,4-bis(4,5-dihydrooxazol-2-yl)benzene (1,4-PBO), and 2,2'-bis-(2-oxazoline). 2,2'-(1,3-phenylene)bis(4,5-dihydrooxazole), also known as 1,3-phenylene-bis-oxazoline (1,3-PBO), or 1,3-bis(4,5-dihydrooxazol-2-yl)benzene, represents a preferred bisoxazoline.

Further, the bisoxazoline may be replaced with a corresponding bis-5,6-dihydro-4H-1,3-oxazine, i.e. a compound comprising at least two [5,6-dihydro-4H-1,3-oxazine] residues, e.g. 1,3-bis(5,6-dihydro-4H-1,3-oxazin-2-yl)benzene, 1,4-bis(5,6-dihydro-4H-1,3-oxazin-2-yl)benzene, or 5,5',6,6'-tetrahydro-4H,4'H-2,2'-bi(1,3-oxazine). As recognized by the skilled person, bis-5,6-dihydro-4H-1,3-oxazines have in principle the same reactivity as the corresponding bisoxazolines. Various bis-5,6-dihydro-4H-1,3-oxazins are thus also useful in the present process. According to an embodiment, the bis-5,6-dihydro-4H-1,3-oxazine is a compound according to formula V, 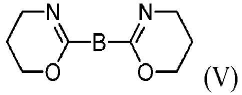 wherein "B" is a bond, meta-phenylene, or para-phenylene. "B" may also be pyridine-2,6-diyl, but that is less preferred.

Further additives that may be added to the thermoplastic polyester composition includes *inter alia* polycarbodiimide and metal deactivators.

The thermoplastic polyester of the thermoplastic polyester composition is typically an aliphatic polyester or a semi aromatic polyester. The polyester may be selected from the group consisting of polyethylene terephthalate (PET), polybutylene terephthalate (PBT), polytrimethylene terephthalate (PTT), polyglycolic acid (PGA), polylactic acid (PLA), polyethylene furanoate (PEF), polycaprolactone (PCL), and polyethylene naphthalate (PEN). Specifically, the polyester employed may be a semi aromatic polyester. Examples of aliphatic polyesters include polylactic acid (PLA), polyglycolic acid (PGA), polycaprolactone (PCL), polyethylene adipate (PEA), and polyhydroxyalkanoate (PHA), e.g. poly-3-hydroxyvalerate (PHV), poly-4-hydroxybutyrate (P4HB), and poly-3-hydroxy propionate (P3HP). Examples of semi aromatic polyesters include polyethylene terephthalate (PET), polyethylene naphthalate (PEN), polypropylene terephthalate (PPT), polybutylene terephthalate (PBT), polytrimethylene terephthalate (PTT) and polyethylene furanoate (PEF). Further, the semi aromatic polyester may be a co-polymer of PET, PBT, PEF or PEN and a further polymer, such as a block co-polymer, a random co-polymer or blends thereof.

According to an embodiment, the thermoplastic polyester is selected from the group consisting of polyethylene terephthalate (PET), polybutylene terephthalate (PBT), polytrimethylene terephthalate (PTT), polyglycolic acid (PGA), polylactic acid (PLA), polycaprolactone (PCL), polyethylene furanoate (PEF), and polyethylene naphthalate (PEN). According to a preferred embodiment the thermoplastic polyester is polyethylene terephthalate (PET).

According to a second aspect there is provided an article comprising the thermoplastic polyester composition comprising the polyphosphonate and the polyanhydride. In producing the article, the polyphosphonate and the polyanhydride, respectively, are melt mixed with the thermoplastic polyester, whereby improving the melt rheology of the thermoplastic polyester composition as well as its flame retardant properties.

The article may be a foam, a bottle, such as a blow molded bottle, or a tray, such as a foam tray for use in the food industry. Further, the article may be a film, a sheet, or a fiber. A typical application of foams of the thermoplastic polyester composition, such as a PET, is as insulation element and/or structural element in buildings or vehicles. A film or a sheet of the thermoplastic polyester composition, such as PET, could subsequently be used in thermoform packaging, e.g. clamshells, trays, cups and similar.

According to a third aspect there is provided for use of a polyphosphonate in combination with a polyanhydride to improve the melt rheology and the flame retardant properties of a thermoplastic polyester composition. The use comprises melt mixing the thermoplastic polyester with the polyphosphonate and the polyanhydride.

As used herein, improving the melt rheology may refer to increasing the melt viscosity, the melt strength, and/or the melt elasticity. According to an embodiment, improving the melt rheology refers to at least increasing the melt strength. Thus, the use may be to increase the melt viscosity, the melt strength, and/or the melt elasticity of the thermoplastic polyester, such as to at least increase the melt strength.

The polyester in the composition to be improved may be polyethylene terephthalate (PET). Further, various aspects disclosed herein above in relation to the thermoplastic polyester composition and its constituents, are equally applicable *mutatis mutandis* to such use. Thus, the polyphosphonate may for example comprise residues of diphenyl-methyl-phosphonate as well as bisphenol A. Further, the polyanhydride may for example be pyromellitic dianhydride (PMDA).

According to a fourth aspect there is provided a method of improving the melt rheology and the flame retardant properties of a thermoplastic polyester, such as increasing the melt viscosity, the melt strength, and/or the melt elasticity of the thermoplastic polyester, e.g. at least increasing the melt strength of the thermoplastic polyester. The method comprises the step of melt mixing a polyanhydride and a polyphosphonate with the thermoplastic polyester. The melt mixing may be performed in a screw extruder.

Further, various aspects disclosed herein above in relation to the thermoplastic polyester composition and its constituents, are equally applicable *mutatis mutandis* to such a method. Thus, the polyphosphonate may comprise residues of diphenyl-methyl-phosphonate as well as bisphenol A. Further, the polyanhydride may for example be pyromellitic dianhydride (PMDA). As already described, the thermoplastic polyester is typically an aliphatic polyester or a semi aromatic polyester, such as polyethylene terephthalate (PET).

Once melt mixed, the resulting melt may be processed, extruded and e.g. foamed or blow molded. The melt may thus be processed into an article, such as a foam, or a blow molded article, e.g. a bottle. As already described, such a foam, may for example be used for trays, e.g. food trays, or as core materiel in light weight construction material, e.g. as a insulation and/or a structural element in a building or a vehicles. Further, the melt may be processed into a film, a sheet, or a fiber. Upgrading of PET using PMDA and subsequent processing into articles has been described in the art, as can be seen in inter alia EP 2 163 577 B1. Further, upgrading by means of reactive extrusion is disclosed in EP 3 246 349.

In melt mixing the polyanhydride, the polyphosphonate and the thermoplastic polyester, the temperature should exceed the melting point of the thermoplastic polyester, i.e. the components should be melt mixed. However, in order to limit the inherent degradation, the temperature should not be too high. The temperature is thus typically lower than 350°C. According to an embodiment, the temperature during the melt mixing is from 200°C to 320°C, such as from 210°C to 280°C. For PET, the temperature during the melt mixing does preferably not exceed 300°C.

According to an embodiment, the process further comprises the step of foaming the obtained thermoplastic polyester having improved melt rheology. According to such an embodiment, the process may further comprise adding a blowing agent, such as carbon dioxide, nitrogen, a ketone, methyl formate, a hydrofluorocarbon, a hydrocarbon, e.g. n-hexane, iso- or n-pentane, cyclopentane or n-heptane, or a gas mixture thereof, an expanding agent, and/or a foaming agent to the thermoplastic polyester. Further, other additives may be added to the thermoplastic polymer. Thus, also a nucleating agent, such as talc, kaolin, silica gel, diatomaceous earth, wollastonite, zeolite, carbonate salts, e.g. sodium carbonate, benzoate salts, e.g. sodium benzoate, bicyclo [2.2.1] heptane dicarboxylate salts, e.g. lithium and sodium salts, 12H-dibenzo[d,g][1,3,2]dioxaphosphocin,2,3,8,10-tetrakis(1,1-dimethylethyl)-6-hydroxy,-6-oxide salts, e.g. a lithium salt, or TiO₂, a flame retardant, such as a halogenated, charforming (like phosphorus-containing) or water-releasing compound, a plasticizer, a lubricant, such as an ester of a fatty acid, an impact modifier, insulation modifier, a pigment, a filler, an antioxidant, a UV-stabilizer and/or a color improver may be added to the thermoplastic polyester and melt mixed therewith.

As already described, the thermoplastic polyester composition with improved melt strength and the flame retardant properties may be foamed. According to an alternative embodiment, the obtained thermoplastic polyester composition with improved melt strength is molded, such as injection molded, blow molded, or injection molded followed by stretch-blow molding, in an additional step.

According to a further aspect of the invention there is thus provided an article obtained by extrusion, injection molding, blow molding, foaming, and/or stretch-blow molding a thermoplastic polyester melt mixed with a polyanhydride and a polyphosphonate. A specific embodiment relates to a PET-foam. Thus, the article may be a foam, such as a foam in the form of an insulation and/or structural element for a building or a vehicle.

According to a further aspect of the invention there is provided a masterbatch comprising a polyphosphonate and a polyanhydride. Such a masterbatch is useful to facilitate addition of polyphosphonate and a polyanhydride to a thermoplastic polyester to provide a thermoplastic polyester composition to eventually provide an article comprising the thermoplastic polyester composition disclosed herein. Further, such a masterbatch facilitates uses and methods wherein a polyphosphonate as well as a polyanhydride are to be present in a thermoplastic polyester composition.

According to an embodiment, the masterbatch comprises at least 30 wt.% of a polyphosphonate, 1.0 to 20.0 wt.% of a polyanhydride and optionally a carrier, such as polyethylene (PE), polypropylene (PP), or polyethylene terephthalate (PET). Further, the ratio (wt./wt.) of polyphosphonate to polyanhydride may be in the range 8:1 to 75:1, such as 10:1 to 50:1 or 12:1 to 25:1.

According to an embodiment, the masterbatch comprises 30 to 80 wt.%, such as 40 to 70 wt.%, of a polyphosphonate, 1.0 to 5.0 wt.% of a polyanhydride, and at least 15 wt.%, such as at least 25 wt.%, of a carrier, such as polyethylene (PE), polypropylene (PP), or polyethylene terephthalate (PET). According to an exemplary embodiment, the masterbatch may comprise about 50 wt.% of a polyphosphonate, about 1.5 to 2.0 wt.% of a polyanhydride and about 48 wt.% of a carrier, such as polyethylene (PE), polypropylene (PP), or polyethylene terephthalate (PET). As already described, the ratio (wt./wt.) of polyphosphonate to polyanhydride may be in the range 8:1 to 75:1, such as 10:1 to 50:1 or 12:1 to 25:1.

The carrier, if present, may be present in an amount of 20 to 70 wt.% in the masterbatch. Carriers for masterbatches to be added to thermoplastic polyester are known in the art. As an example, the carrier may be polyethylene (PE), polypropylene (PP), or polyethylene terephthalate (PET). Further, the carrier may be selected from the group consisting of polyolefins, e.g. polyethylene and/or polypropylene, ethylene-acrylate copolymers (EMA, EBA, EEA), thermoplastic waxes, polyolefin waxes, polyolefin elastomers, such as Vistamaxx^{™} supplied from ExxonMobil (a propylene based elastomer in an olefinic elastomer: e.g. isotactic propylene with randomly distributed ethylene), polyolefin plastomers, such as QUEO^{™} (alpha olefin co-polymers) supplied from Borealis, MAH-g-polyolefin (maleic anhydride grafted polyolefin), styrenics including but not limit to MAH-copolymer styrenics, polyolefin ionomers, such as ethylene ionomers (copolymers of ethylene and acrylic acid partially neutralized with metal cations, such as sodium, zinc and lithium), polyesters, such as polyethylene terephthalate (PET) and/or polybutylene terephthalate (PBT), co-polymers of polyesters, such as co-polyesters (e.g. PETG; terephthalic acid/ethylene glycol/cyclohexanedimethanol), thermoplastic elastomers, such as polyether esters (e.g. a block co-polymer comprising polyester blocks and polyether blocks), or polyether amides (e.g. a block co-polymer comprising polyamide blocks and polyether blocks). Other examples of carriers are polycarbonate (PC), polystyrene (PS), acrylonitrile butadiene styrene (ABS), ethylene vinyl acetate (EVA). Further, the carrier may be a mixture of two or more of such polymers.

The carrier may be selected from the group consisting of polyolefins, e.g. polyethylene and/or polypropylene, ethylene-acrylate copolymers (EMA, EBA, EEA), thermoplastic waxes, polyolefin waxes, polyolefin elastomers, such as Vistamaxx^{™} supplied from ExxonMobil (a propylene based elastomer in an olefinic elastomer: e.g. isotactic propylene with randomly distributed ethylene), polyolefin plastomers, such as QUEO^{™} (alpha olefin co-polymers) supplied from Borealis, MAH-g-polyolefin (maleic anhydride grafted polyolefin), styrenics including but not limit to MAH-copolymer styrenics, polyolefin ionomers, such as ethylene ionomers (copolymers of ethylene and acrylic acid partially neutralized with metal cations, such as sodium, zinc and lithium), polyesters, such as polyethylene terephthalate (PET) and/or polybutylene terephthalate (PBT), co-polymers of polyesters, such as co-polyesters (e.g. PETG; terephthalic acid/ethylene glycol/cyclohexanedimethanol), thermoplastic elastomers, such as polyether esters (e.g. a block co-polymer comprising polyester blocks and polyether blocks), or polyether amides (e.g. a block co-polymer comprising polyamide blocks and polyether blocks), or a mixture of two or more of such polymers.

The carrier may according to an embodiment be a polyolefin, e.g. polyethylene and/or polypropylene, an ethylene-acrylate copolymer (EMA, EBA, EEA), a thermoplastic wax, a polyolefin waxes, a polyolefin elastomer, such as Vistamaxx^{™} supplied from ExxonMobil (a propylene based elastomer in an olefinic elastomer: e.g. isotactic propylene + randomly distributed ethylene), a polyolefin plastomer, such as QUEO^{™} (alpha olefin co-polymers) supplied from Borealis, a MAH-g-polyolefin (maleic anhydride grafted polyolefin), a styrenic including but not limit to MAH-copolymer styrenics, a polyester, such as polyethylene (PET) and/or polybutylene terephthalate (PBT), a co-polyester (e.g. PETG; terephthalic acid/ethylene glycol/cyclohexanedimethanol), or a mixture of two or more such polymers.

The carrier may according to an embodiment be a polyolefin, e.g. polyethylene and/or polypropylene, a polyester, such as polyethylene terephthalate (PET) and/or polybutylene terephthalate (PBT), a co-polyester, such as PETG (terephthalic acid/ethylene/glycol/cyclohexane-dimethanol), a polyether-ester block copolymer, an ethylene-acrylate co-polymer (EMA, EBA, EEA), a polyolefin plastomer, such as QUEO^{™}, or a mixture of two or more such polymers.

According to a typical embodiment, the polyphosphonate and the polyanhydride are being mixed, e.g. compounded, into the same carrier. The weight ratio of polyphosphonate to the polyanhydride is fixed in such a masterbatch. Further, compounding in the same carrier ensures equal, uniform distribution of the polyphosphonate and the polyanhydride. While the polyphosphonate and the polyanhydride typically are compounded into the carrier, i.e. melt mixed with the carrier, they may, according to some embodiments, be dry blend and cold mixed with carrier. Such a dry mix may be compacted or cold extruded.

According to another embodiment, the polyphosphonate is used as carrier, i.e., the polyphosphonates serves as carier for the polyanhydride. Given its properties, e.g. a glass transition temperature of about 105°C and MFR [ml/10min] of 10 (at 240°C/1.2 kg), the polyphosphonate may be used as carrier. Using the polyphosphonate as carrier may be attractive as it removes potential compatibility problems between the carrier and the additives, i.e. polyphosphonate and /or the polyanhydride. Further, using the polyphosphonate as carrier implies that less material needs to be transported and eliminates any cost associated with a separate carrier. In such an embodiment, the content of the polyphosphonate may be as high as 80 to 98 wt%. The content of the polyanhydride may be 2.0 to 20.0 wt.%, such as 5.0 to 15.0 wt.%. As already described, the ratio (wt./wt.) of polyphosphonate to polyanhydride may be in the range 8:1 to 75:1, such as 10:1 to 50:1 or 12:1 to 25:1.

According to an alternative embodiment, the masterbatch comprises a first carrier comprising the polyanhydride and a second carrier comprising the polyphosphonate. According to such an embodiment, the polyanhydride is mixed, e.g. compounded, into the first carrier, and the polyphosphonate is mixed, e.g. compounded, into the second carrier. A masterbatch may according to such an embodiment be provided by blending the first carrier comprising the polyanhydride and the second carrier comprising the polyphosphonate. Typically, the first carrier, comprising the polyanhydride, and the second carrier, comprising the polyphosphonate, are blended in solid state, i.e. they are dry blended or mixed. They may be mixed at ambient temperature (e.g. about 20°C). By using a first and second a carrier, the weight ratio of polyanhydride to the polyphosphonate may easily be adjusted. Further, the risk of polyanhydride and the polyphosphonate interacting during manufacture of the masterbatch may be avoided. In order to facilitate the use of the masterbatch, the dry mix of the first carrier with the polyanhydride and the second with the polyphosphonate may be compacted, e.g. powder compacted, or cold extruded, whereby the masterbatch may be provided as pellets.

Aspects and preferred variants of e.g. the polyphosphonate and the polyanhydride (e.g. pyromellitic dianhydride) have already been described herein above. These are equally applicable in relation to the masterbatch. Further, the masterbatch may, apart from the polyphosphonate and a polyanhydride, comprise further additives, such as a bisoxazoline, a sterically hindered phenolic antioxidant, primary antioxidant and/or secondary antioxidant. Examples of such additives have been given herein above.

As recognized by the skilled person, a masterbatch is a solid additive for plastics used for coloring plastics (color masterbatch) or for imparting other properties to plastics (additive masterbatch). The present masterbatch is typically an additive masterbatch. An additive masterbatch is a concentrated mixture of additive(s) and a carrier. Typically, the additive(s) are mixed with a carrier in a heat shearing process and subsequently cooled and e.g. cut into a granular shape. In the present masterbatch, the polyphosphonate is in some embodiments used as carrier. In such embodiments, the polyphosphonate serves as carrier for the polyanhydride, as well as being an additive.

According to an alternative embodiment, the polyphosphonate is replaced by calcium hypophosphite or phenoxycycloposphazene in the composition herein, in the article herein, in the use herein, in the method herein, or in the masterbatch herein.

Without further elaboration, it is believed that one skilled in the art may, using the preceding description, utilize the present invention to its fullest extent. The preceding preferred specific embodiments are, therefore, to be construed as merely illustrative and not limitative of the disclosure in any way whatsoever.

Although the present invention has been described above with reference to specific embodiments, it is not intended to be limited to the specific form set forth herein. Rather, the invention is limited only by the accompanying claims and, other embodiments than the specific above are equally possible within the scope of these appended claims, e.g. different than those described above.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc. do not preclude a plurality.

### EXPERIMENTAL

The following examples are mere examples and should by no means be interpreted to limit the scope of the invention. Rather, the invention is limited only by the accompanying claims.

### Abbreviations

- **PET**: polyethylene terephthalate
- **PMDA**: pyromellitic dianhydride
- **ZnPh**: Diethyl Zinc Phosphinate (e.g. Exolit OP950)
- **ZrPy**: Zirconium Pyrophosphate
- **ZrPh**: Zirconium Phosphate
- **ZnBO3**: Zinc Borate
- **MPP**: Melamine PolyPhosphate
- **P-red**: Red phosphorous (in 50% masterbatch)
- **DAPP**: Aluminium Diethyl PhosPhinate
- **PolyPh**: Poly Phosphonate (e.g. FRX Nofia HM1100)
- **CaHP**: calcium hypophosphite
- **PCPA**: phenoxycycloposphazene
- **PBO**: phenylene-bis-oxazoline
- **PETA**: Phenylethynyltrimelliticanhydride

### Drawings

**Fig. 1** provides a comparison of the resulting torque over time from compounding a) PET and PMDA (control), b) PET, PMDA and meltable zinc, phosphinates (ref. example), and c) PET, PMDA and polyphosphonate (inventive example); and
**Fig. 2** provides a comparison of the resulting pressure over time from compounding a) PET and PMDA (control), b) PET, PMDA and meltable zinc, phosphinates (ref. example), and c) PET, PMDA and polyphosphonate (inventive example).

### Material and methods

In the examples, NeoPET 82 (IV=0.82 ± 0.02 dl/g; NEOGROUP) were modified by reactive extrusion in micro-compounder (ThermoFisher Scientific Haake MiniLab II) in the presence of additives. The additives were:
- Diethyl Zinc Phosphinate (Exolit OP950) from Clariant
- Zirconium Pyrophosphate from Sunshine Factory Co. Ltd
- Zirconium Phosphate from Sunshine Factory Co. Ltd
- Poly Phosphonate (Nofia HM1100) from FRX Polymers
- Calcium hypophosphite from Green Chemicals
- Phenoxycycloposphazene from Green Chemicals
- Zinc Borate from Green Chemicals
- MPP, Melamine PolyPhosphate, from Green Chemicals
- P-red,Red phosphorous (in 50% masterbatch), from Green Chemicals
- DAPP, Aluminium Diethyl PhosPhinate, from Green Chemicals
- PMDA, pyromellitic dianhydride, from Nexam Chemical
- PBO, A99, phenylene-bis-oxazoline, from Nexam Chemical

The compounding of PET (vacuum dried for 12 hours at 120°C) and the additives were performed in a Haake MiniLab II (a micro-compounder with closed loop). The compounding was performed at 270°C and 60 rpm for 15-20 minutes. The pressure and torque were measured as an indicative measure of cross-linking, chain-extension and branching, as well as melt stability.

In the examples below, all amounts are given relative PET in weight%.

### Results

In order to allow for a comparison and various conclusions to be drawn, examples were grouped together in different combinations.
IE = Inventive example
CE = Comparative example
Ref = Reference

### Example 1 - meltable zinc phosphinates impair the melt strength, whereas polyphosphonates improve it

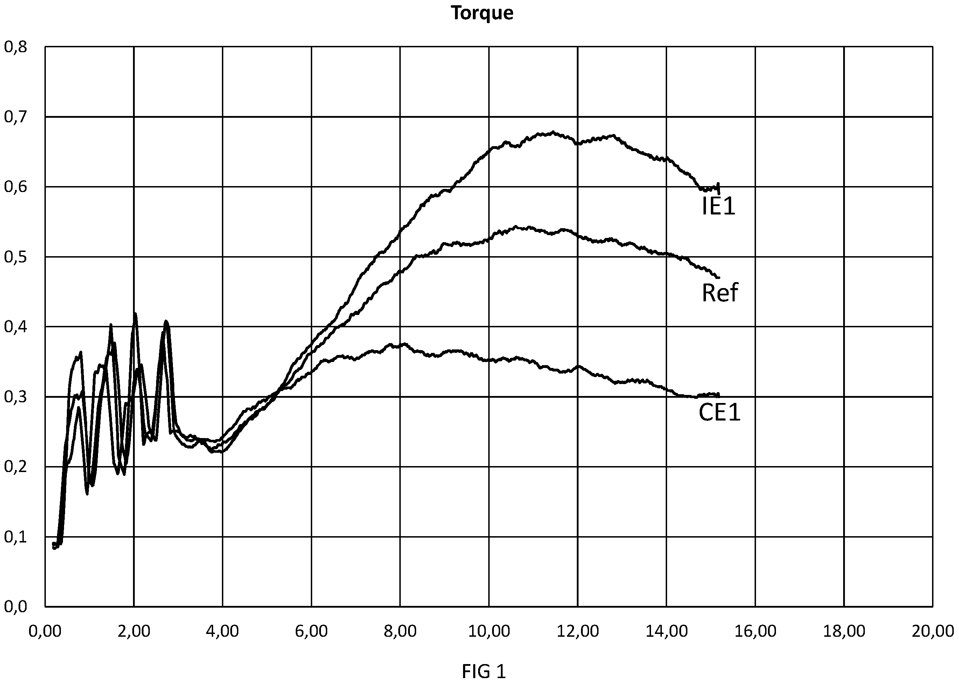

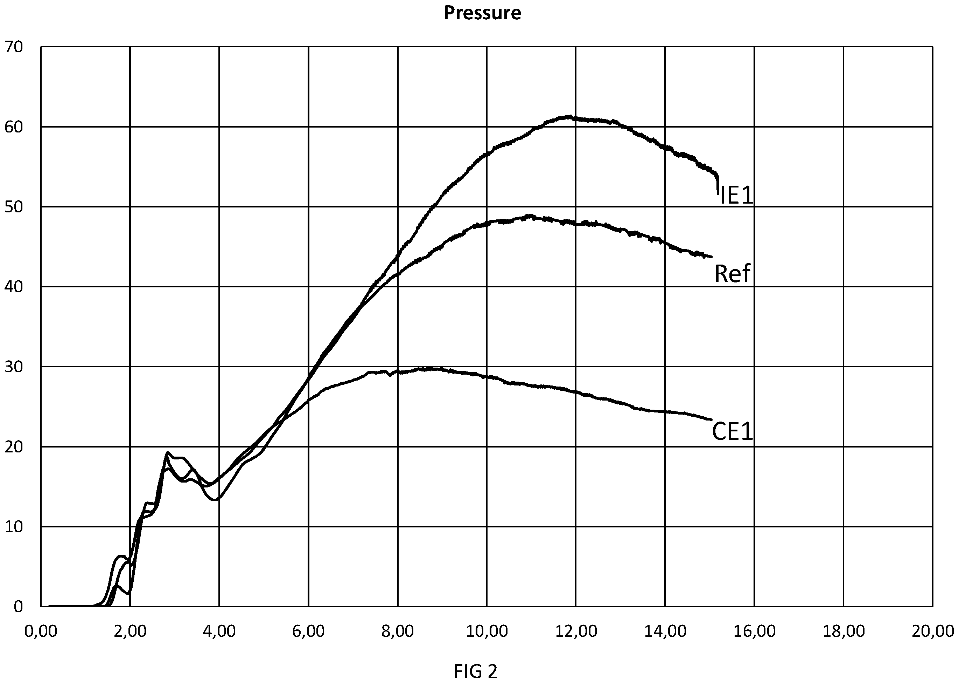

In example 1, ref. (no flame retarding agent), CE1 (diethyl zinc phosphinate - a meltable zinc phosphinate) and IE1 (Nofia HM1100 - a polyphosphonate) were compared. In line with the general understanding in the art, addition of meltable zinc phosphinates as flame retardant agents for PET foaming, as suggested by EP2258754B1, resulted in impaired melt strength as can be seen from **Fig. 1** and **2** (cf. CE1 vs. REF). The pressure and torque, respectively, after compounding for 12 minutes was reduced by about 40% in the presence of diethyl zinc phosphinate, a meltable zinc phosphinate. On the contrary, and very surprisingly, as can be seen from **Fig. 1** and **2** (cf. IE1 vs. REF) addition of polyphosphonate did not impair the melt strength, but was actually found to increase it, indicating that a synergy with PMDA is at hand.

This finding is very interesting, as polyphosphonates emerge as a very attractive candidate for use as flame regarding agent in combination with polyanhydrides in e.g. PET foaming, to provide flame retardant PET foam for use as insulation and/or structural element in e.g. buildings or a vehicles.

In **Table 1** below, the maximal pressure and torque as well as the pressure and torque after 12 minutes of melt mixing is given. The figures are taken from the runs underlying **Figs. 1** and **2****.**

**Table 1**

| **FORMULATION** | **FR Type** | **PMDA** | **P (max)** | **T (max)** |
|---|---|---|---|---|
| Ref. | NA | 0.4% | 100% | 100% |
| IE 1 | PolyPh 5% | 0.4% | 136% | 133% |
| CE3 | ZnPh 5% | 0.4% | 66% | 76% |

### Example 2 - conventional FR-agents impairs melt strength even in the presence of PMDA

In a further example, it was shown that addition of alternative flame retarding agents (cf. CE4 to CE9) commonly used in the art was even more detrimental (cf. **Table 2**) to the melt strength than meltable zinc phosphinates (CE3).

As can be seen in **Table 2** below, the statement in EP2258754B1, turned seemingly out to be correct; meltable zinc phosphinates are indeed less detrimental to the melt strength of PET than other flame retarding agents. However, as seen in example 1, they are still inferior compared to polyphosphonates.

**Table 2**

| **FORMULA TION** | **FR Type** | **PMDA** | **P (max)** | **T (max)** |
|---|---|---|---|---|
| Ref. | NA | 0.4% | 100% | 100% |
| CE3 | ZnPh 5% | 0.4% | 66% | 76% |
| CE4 | ZrPy 5% | 0.4% | 33% | 80% |
| CE5 | ZrPh 5% | 0.4% | 34% | 75% |
| CE6 | ZnB03 5% | 0.4% | 38% | 65% |
| CE7 | MPP 5% | 0.4% | 51% | 59% |
| CE8 | P-red 5% | 0.4% | 62% | 67% |
| CE9 | DAPP 5% | 0.4% | 58% | 59% |

### Example 3 - FRX does not impair the melt strength and even acts synergistically with PMDA (less PMDA could be used).

In a further example, it was shown that polyphosphonates on their own - in the absence of PMDA - not are able to provide sufficient melt strength (cf. **Table 3**), confirming the need to combine with PMDA as they act synergistically. However, it was shown that the dosing of PMDA could be reduced from 0.4 to 0.3% in the presence of a polyphosphonate, still providing improved melt strength over use of PMDA only (cf. **Table 3**).

**Table 3**

| **FORMULA TION** | **FR Type** | **PMDA** | **P (max)** | **T (max)** |
|---|---|---|---|---|
| Ref. | NA | 0.4% | 100% | 100% |
| Neg Ctrl | PolyPh 5% | - | 43% | 84% |
| IE1 | PolyPh 5% | 0.4% | 136% | 133% |
| IE2 | PolyPh 5% | 0.3% | 114% | 116% |

### Example 4 - shows that PMDA and polyphosphonates may be supplemented with further additives known to improve the melt strength

Successful foaming requires high pressure in the extruder. PMDA is thus often combined with additional additives such as PBO in order to further affect the melt strength. As can be seen in **Table 4**, addition of PBO provide a substantially improved melt strength (cf. Ref Foam 2 vs ref.). It was surprisingly shown that the loading of PMDA and PBO actually could be reduced if also a polyphosphonate is added, still providing essentially the same melt strength (cf. Ref Foam 1 vs. IE3). As can be seen (IE3 vs. Ref foam 2), addition of a polyphosphonate provides an increase in the melt strength. Further, reducing the amount of the polyphosphonate also reduces the melt strength (cf. IE4 vs. IE3), confirming the synergism between FRX and PMDA.

**Table 4**

| **FORMULA TION** | **FR Type** | **PMDA** | **PBO** | **P (max)** | **T (max)** |
|---|---|---|---|---|---|
| Ref. | - | 0.3% | - | 100% | 100% |
| Neg Ctrl | PolyPh 5.1% | - | 0.4% | 59% | 71% |
| Ref foam 1 | - | 0.4% | 0.2% | 201% | 190% |
| Ref foam 2 | - | 0.3% | 0.1% | 129% | 120% |
| IE3 | PolyPh 5.1% | 0.3% | 0.1% | 183% | 162% |
| IE4 | PolyPh 1.4% | 0.3% | 0.1% | 128% | 120% |

### Example 5 - show that sufficient levels of FRX to give flame retardancy can be added and still generate sufficient pressure for foaming

Shows that different and sufficient levels of polyphosphonates can be added without impairing the possibility to keep melt properties required for foaming.

**Table 5**

| **FORMULA TION** | **FR Type** | **PMDA** | **P (max)** | **T (max)** |
|---|---|---|---|---|
| Ref | - | 0.3% | 100% | 100% |
| CE10 | ZnPh 5% | 0.3% | 70% | 67% |
| IE7 | PolyPh 5% | 0.3% | 122% | 133% |
| IE8 | PolyPh 10% | 0.3% | 112% | 151% |
| IE9 | PolyPh 15% | 0.3% | 80% | 101% |

### Example 6 - shows that alternatives to polyphosphonate can be used to generate sufficient pressure for foaming

Apart from polyphosponates, also calcium hypophosphite CAS 7789-79-9 (also known as Calcium phosphinate; denoted CaHP herein) and phenoxycycloposphazene CAS 1184-10-7 (denoted PCPA herein)emerged as potential flame retarding agents to be used in combination with a polyanhydride in PET for e.g. foaming applications requiring high melt strength. As can be seen from Table 6, contrary to common flame retarding agents (cf. CE3), addition of the flame retarding agent CaHP and PCPA had very limited effect on the melt strength. Similar to polyphosponates, CaHP and PCPA are thus useful as flame retarding in combination with a polyanhydride in PET for e.g. foaming applications. As can be seen in Table 6, it is clear that polyphosponates represent the most preferred kind of flame retarding agent in such applications.

According to an alternative aspect, calcium hypophosphite or phenoxycycloposphazene may be used to replace polyphosphonate in aspects and embodiments disclosed herein above.

**Table 6**

| **FORMULATION** | **FR Type** | **PMDA** | **P (max)** | **T (max)** |
|---|---|---|---|---|
| Ref. | NA | 0.4% | 100% | 100% |
| IE1 | PolyPh 5% | 0.4% | 136% | 133% |
| CE3 | ZnPh 5% | 0.4% | 66% | 76% |
| IE5 | CaHP 5% | 0.4% | 92% | 93% |
| IE6 | PCPA 5% | 0.4% | 95% | 97% |

## Claims

1. A thermoplastic polyester composition, wherein the composition, apart from a thermoplastic polyester as the major component, comprises 1 to 30 wt.% of a polyphosphonate and 0.01 to 1.5 wt.% of a polyanhydride.

2. The thermoplastic polyester composition according to claim 1, wherein the polyphosphonate comprises residues of diphenyl-alkyl-phosphonate, e.g. diphenyl-methyl-phosphonate; preferably the polyphosphonate comprising residues of an aromatic diol, e.g. a bisphenol, such as bisphenol A.

3. The thermoplastic polyester composition according to claim 1 or 2, wherein the polyphosphonate is a polyphosphonate of Formula I, a random or block co-poly(phosphonate carbonate) of Formula II, or a random or block co-poly(phosphonate ester) of Formula III: 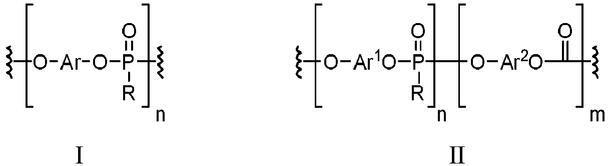 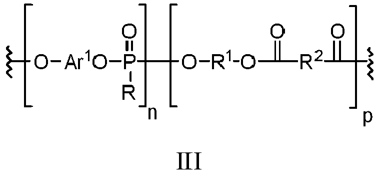 wherein:
Ar is an aromatic group and -O-Ar-O- is derived from resorcinol, hydroquinone, methyl hydroquinone, bisphenol A, bisphenol F, 4,4'-biphenol, phenolphthalein and phenolphthalein derivatives, 4,4'-thiodiphenol, 4,4'-sulfonyldiphenol, 1,1-bis-(4- hydroxyphenyl)-3,3,5-trimethylcyclohexane, or combinations thereof; preferably Ar is derived from bisphenol A;
Ar¹ and Ar² are aromatic groups and each -O-Ar¹-O- and -O-Ar²-O- is, individually, derived from resorcinol, hydroquinone, bisphenol A, bisphenol F, 4,4'-biphenol, phenolphthalein, 4,4'-thiodiphenol, 4,4'-sulfonyldiphenol, 1,1-bis-(4-hydroxyphenyl)-3,3,5-trimethylcyclohexane, and combinations thereof; preferably Ar¹ and Ar², respectively, are derived from bisphenol A;
R is a C1-20 alkyl, C2-20 alkene, C2-20, alkyne, C5-20 cycloalkyl, or C6-20 aryl; preferably R is methyl;
each R¹ and R² are, individually, aliphatic hydrocarbons, such as ethylene or butylene, or aromatic hydrocarbons, such as phenylene;
m is an integer from 1 to 200, such as 5 to 100;
n is an integer from 1 to 200, such as 5 to 100; and
p is an integer from 1 to 200, such as 5 to 100,
wherein m, n and p are selected such that the degree of polymerization is at least 3, preferably at least 10.

4. The thermoplastic polyester composition according to any one of claims 1 to 3, wherein the polyanhydride is a tetracarboxylic dianhydride, such as pyromellitic dianhydride (PMDA) or 3,3',4,4'-Benzophenonetetracarboxylic dianhydride (BTDA); preferably the polyanhydride being pyromellitic dianhydride (PMDA); and/or
wherein the thermoplastic polyester is selected from the group consisting of polyethylene terephthalate (PET), polybutylene terephthalate (PBT), polytrimethylene terephthalate (PTT), polyglycolic acid (PGA), polylactic acid (PLA), polycaprolactone (PCL), polyethylene furanoate (PEF), and polyethylene naphthalate (PEN); preferably the thermoplastic polyester being polyethylene terephthalate (PET).

5. The thermoplastic polyester composition according to any one of claims 1 to 4, wherein the composition, apart from the thermoplastic polyester as the major component, comprises 5 to 15 wt.% of the polyphosphonate and 0.1 to 0.5 wt.% of the polyanhydride..

6. An article comprising the thermoplastic polyester composition according to any one of claims 1 to 5, wherein the polyphosphonate and the polyanhydride have been melt mixed with the thermoplastic polyester in producing the article; preferably the article being a foam, such as a foam in the form of an insulation and/or structural element for a building or a vehicles.

7. Use of a polyphosphonate in combination with a polyanhydride to improve the melt rheology and the flame retardant properties of a thermoplastic polyester composition, wherein said use comprises meltmixing the thermoplastic polyester with the polyphosphonate and the polyanhydride; preferably said use being to increase the melt viscosity, the melt strength, and/or the melt elasticity; more preferably said use being to at least increase the melt strength.

8. The use according to claim 7, wherein the polyphosphonate comprises residues of diphenyl-alkyl-phosphonate, e.g. diphenyl-methyl-phosphonate; preferably the polyphosphonate comprising residues of an aromatic diol, e.g. a bisphenol, such as bisphenol A.

9. The thermoplastic polyester composition according to claim 7 or 8, wherein the polyphosphonate is a polyphosphonate of Formula I, a random or block co-poly(phosphonate carbonate) of Formula II, or a random or block co-poly(phosphonate ester) of Formula III: 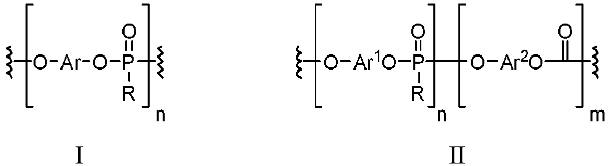 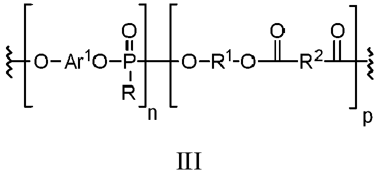 wherein:
Ar is an aromatic group and -O-Ar-O- is derived from resorcinol, hydroquinone, methyl hydroquinone, bisphenol A, bisphenol F, 4,4'-biphenol, phenolphthalein and phenolphthalein derivatives, 4,4'-thiodiphenol, 4,4'-sulfonyldiphenol, 1,1-bis-(4- hydroxyphenyl)-3,3,5-trimethylcyclohexane, or combinations thereof; preferably Ar is derived from bisphenol A;
Ar¹ and Ar² are aromatic groups and each -O-Ar¹-O- and -O-Ar²-O- is, individually, derived from resorcinol, hydroquinone, bisphenol A, bisphenol F, 4,4'-biphenol, phenolphthalein, 4,4'-thiodiphenol, 4,4'-sulfonyldiphenol, 1,1-bis-(4-hydroxyphenyl)-3,3,5-trimethylcyclohexane, and combinations thereof; preferably Ar¹ and Ar², respectively, are derived from bisphenol A;
R is a C1-20 alkyl, C2-20 alkene, C2-20, alkyne, C5-20 cycloalkyl, or C6-20 aryl; preferably R is methyl;
each R¹ and R² are, individually, aliphatic hydrocarbons, such as ethylene or butylene, or aromatic hydrocarbons, such as phenylene;
m is an integer from 1 to 200, such as 5 to 100;
n is an integer from 1 to 200, such as 5 to 100; and
p is an integer from 1 to 200, such as 5 to 100,
wherein m, n and p are selected such that the degree of polymerization is at least 3, preferably at least 10; and/or
wherein the polyanhydride is a tetracarboxylic dianhydride, such as pyromellitic dianhydride (PMDA) or 3,3',4,4'-Benzophenonetetracarboxylic dianhydride (BTDA); preferably the polyanhydride being pyromellitic dianhydride (PMDA); and/or
wherein the thermoplastic polyester is selected from the group consisting of polyethylene terephthalate (PET), polybutylene terephthalate (PBT), polytrimethylene terephthalate (PTT), polyglycolic acid (PGA), polylactic acid (PLA), polycaprolactone (PCL), polyethylene furanoate (PEF), and polyethylene naphthalate (PEN); preferably the thermoplastic polyester being polyethylene terephthalate (PET).

10. A method of improving the melt rheology and the flame retardant properties of a thermoplastic polyester composition, said method comprising the step of melt mixing a polyanhydride and a polyphosphonate with the thermoplastic polyester; preferably the melt mixing being performed in a screw extruder.

11. The method according to claim 10, wherein the polyphosphonate comprises residues of diphenyl-alkyl-phosphonate, e.g. diphenyl-methyl-phosphonate; preferably the polyphosphonate comprising residues of an aromatic diol, e.g. a bisphenol, such as bisphenol A.

12. The thermoplastic polyester composition according to claim 10 or 11, wherein the polyphosphonate is a polyphosphonate of Formula I, a random or block co-poly(phosphonate carbonate) of Formula II, or a random or block co-poly(phosphonate ester) of Formula III: 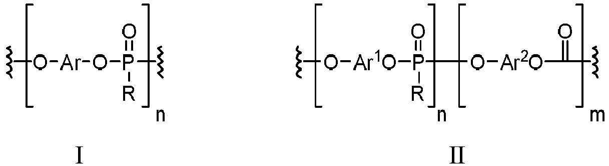 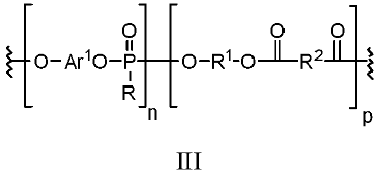 wherein:
Ar is an aromatic group and -O-Ar-O- is derived from resorcinol, hydroquinone, methyl hydroquinone, bisphenol A, bisphenol F, 4,4'-biphenol, phenolphthalein and phenolphthalein derivatives, 4,4'-thiodiphenol, 4,4'-sulfonyldiphenol, 1,1-bis-(4- hydroxyphenyl)-3,3,5-trimethylcyclohexane, or combinations thereof; preferably Ar is derived from bisphenol A;
Ar¹ and Ar² are aromatic groups and each -O-Ar¹-O- and -O-Ar²-O- is, individually, derived from resorcinol, hydroquinone, bisphenol A, bisphenol F, 4,4'-biphenol, phenolphthalein, 4,4'-thiodiphenol, 4,4'-sulfonyldiphenol, 1,1-bis-(4-hydroxyphenyl)-3,3,5-trimethylcyclohexane, and combinations thereof; preferably Ar¹ and Ar², respectively, are derived from bisphenol A;
R is a C1-20 alkyl, C2-20 alkene, C2-20, alkyne, C5-20 cycloalkyl, or C6-20 aryl; preferably R is methyl;
each R¹ and R² are, individually, aliphatic hydrocarbons, such as ethylene or butylene, or aromatic hydrocarbons, such as phenylene;
m is an integer from 1 to 200, such as 5 to 100;
n is an integer from 1 to 200, such as 5 to 100; and
p is an integer from 1 to 200, such as 5 to 100,
wherein m, n and p are selected such that the degree of polymerization is at least 3, preferably at least 10; and/or
wherein the polyanhydride is a tetracarboxylic dianhydride, such as pyromellitic dianhydride (PMDA) or 3,3',4,4'-Benzophenonetetracarboxylic dianhydride (BTDA); preferably the polyanhydride being pyromellitic dianhydride (PMDA); and/or
wherein the thermoplastic polyester is selected from the group consisting of polyethylene terephthalate (PET), polybutylene terephthalate (PBT), polytrimethylene terephthalate (PTT), polyglycolic acid (PGA), polylactic acid (PLA), polycaprolactone (PCL), polyethylene furanoate (PEF), and polyethylene naphthalate (PEN); preferably the thermoplastic polyester being polyethylene terephthalate (PET).

13. A masterbatch for improving the melt rheology and the flame retardant properties of a thermoplastic polyester, wherein the masterbatch comprises a polyphosphonate and a polyanhydride.

14. The masterbatch according to claim 13, wherein the masterbatch comprises at least 30 wt.% of a polyphosphonate, 1.0 to 20.0 wt.% of a polyanhydride, and optionally a carrier.

15. The masterbatch according to claim 13 or 14, wherein the masterbatch comprises 30 to 80 wt.%, such as 40 to 70 wt.% of a polyphosphonate, 1.0 to 5.0 wt.% of a polyanhydride and at least 15 wt.%, such as at least 25 wt.%, of a carrier; or
wherein the masterbatch comprises 80 to 98 wt%. of a polyphosphonate and 2.0 to 20.0 wt.% of a polyanhydride.
